Europäisches Patentamt

(19) European Patent Office

Office européen des brevets

(11) Numéro de publication: **0 188 158**
**B1**

(12) **FASCICULE DE BREVET EUROPÉEN**

(45) Date de publication du fascicule du brevet: 08.06.88

(21) Numéro de dépôt: **85402530.1**

(22) Date de dépôt: **18.12.85**

(51) Int. Cl.⁴: **B 62 D 5/22,** B 62 D 5/12

(54) **Mécanisme de direction assistée compacte pour véhicule automobile.**

(30) Priorité: **14.01.85 ES 539535**

(43) Date de publication de la demande: **23.07.86 Bulletin 86/30**

(45) Mention de la délivrance du brevet: **08.06.88 Bulletin 88/23**

(84) Etats contractants désignés: **DE FR GB IT**

(56) Documents cité: **FR-A-2 205 876** **FR-A-2 357 413**

(73) Titulaire: **BENDIX ESPANA S.A., Balmes 243, Barcelona 6 (ES)**

(72) Inventeur: **Rosell, Jorge Estela, c/Escornalbou 23 1ò 1a, Barcelona 26 (ES)**

(74) Mandataire: **Le Moenner, Gabriel, Division Technique Service Brevets Bendix Europe 126, rue de Stalingrad, F-93700 Drancy (FR)**

## Description

La présente invention concerne les mécanismes de direction assistée pour véhicules automobiles et, plus particulièrement, un mécanisme de direction assistée du type comprenant: un boîtier fixe dans lequel est agencé un ensemble coopérant à pignon et crémaillère, le pignon étant destiné à être relié à un organe de commande d'entrée du mécanisme, typiquement à un volant de direction du véhicule; un ensemble d'assistance à fluide sous pression comprenant un premier piston fixe solidarisé au boîtier par une première tige auquel est associé un premier cylindre mobile disposé parallèlement à la crémaillère et couplé à cette dernière et délimitant une première paire de chambres de pression de part et d'autre du premier piston; un moyen de valve de distribution actionnable par l'organe de commande d'entrée pour alimenter sélectivement en fluide sous pression les chambres de la première paire de chambres; et des moyens de connection reliés à la crémaillère et destinés à être reliés à un mécanisme d'orientation de roues du véhicule.

Un mécanisme de ce type est décrit dans le document FR-A-2 357 413. Dans ce document, l'ensemble d'assistance comprend un ensemble unique à piston fixe et cylindre mobile disposé parallèlement au boîtier fixe, à l'extérieur de celui-ci, selon un agencement présentant un nombre important de zones de coulissement à protéger. D'autre part, dans ce document, la crémaillère coulisse, au moyen de coussinets tubulaires auxquels eat relié le cylindre d'assistance, dans le boîtier fixe qui doit être en conséquence, ainsi que les coussinets tubulaires, être usiné avec une grande précision.

On connaît d'autre part, notamment du document US-A-3 249 173, des systèmes de direction assistée utilisant plusieurs ensembles d'assistance à pistons et cylindres associés à des circuits hydrauliques propres et actionnables séquentiellement.

La présente invention a pour objet de proposer un mécanisme de direction assistée du type défini en premier ci-dessus, de configuration particulièrement simple, compacte et robuste, de faibles coûts de fabrication et permettant une grande souplesse d'adaptation et d'utilisation dans une large gamme d'efforts d'assistance, notamment avec une installation hydraulique à double circuits.

Pour ce faire, selon une caractéristique de l'invention, le mécanisme comprend un second piston fixe solidarisé au boîtier par une seconde tige, auquel est associé un second cylindre mobile supportant la crémaillère, délimitant une seconde paire de chambres de part et d'autre du second piston, et auquel sont reliés les moyens de connection, le moyen de valve de distribution étant agencé pour alimenter également sélectivement les chambres de la seconde paire de chambres.

Dans un tel agencement, pour un fonctionnement en simple circuit, les efforts d'assistance peuvent être considérablement accrus sans entraîner d'augmentation importante de l'encombrement global ni de surcoûts de fabrication. D'autre part, cet agencement autorise, également sans entraîner de surcoûts de fabrication ni de problèmes d'implantation dans le véhicule, une utilisation à double circuits susceptibles d'être mis en oeuvre en série et/ou en parallèle.

Selon une caractéristique plus particulière de l'invention, les moyens de connection s'étendent à guidage et à coulissement au travers d'une ouverture formée dans une paroi latérale du boîtier fixe.

Avec un tel agencement, du type dit à sortie centrale, les problèmes de jeux de montage et de rattrapage des tolérances sont pratiquement éliminés, ce qui permet de réduire encore les coûts de fabrication et de montage.

D'autres caractéristiques et avantages de la présente invention ressortiront de la description suivante de modes de réalisation donnés à titre illustratif mais nullement limitatif, faite en relation avec les dessins annexés, sur lesquels :

- la Figure 1 est une vue schématique du dessus, partiellement en coupe, d'un mécanisme de direction assistée selon l'invention ;
- la Figure 2 est une vue en coupe longitudinale médiane du mécanisme de la Figure 1 ;
- les Figures 3 et 4 sont des vues en coupe transversale respectivement suivant les plans de coupe III-III et IV-IV du mécanisme de la Figure 1; et
- la Figure 5 est une vue schématique montrant l'implantation d'un mécanisme de direction assistée selon l'invention sur un châssis de véhicule.

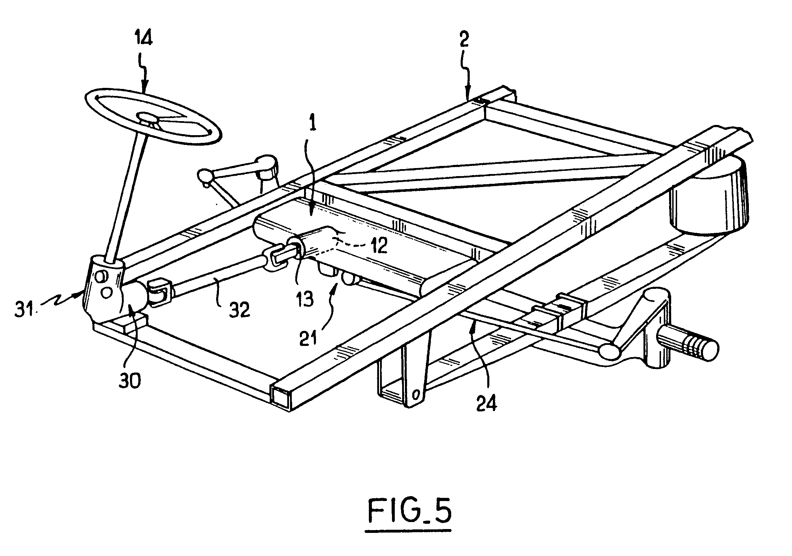

Comme représenté sur les dessins, le mécanisme de direction assistée selon l'invention comprend un boîtier de direction, généralement désigné par la référence 1, réalisé typiquement en fonderie, et destiné à être fixé transversalement sur un châssis 2 de véhicule automobile comme on le voit sur la Figure 5. Entre les faces latérales du boîtier 1 sont disposées, fixées à ces dernières, une première tige 3 et une seconde tige 4 parallèles l'une à l'autre. La première tige 3 porte, centralement, une première structure de piston 5. Similairement, la seconde tige 4 porte, centralement, une seconde structure de piston 6. Un premier cylindre mobile 7 est monté à coulissement étanche sur la première tige 3 de la première structure de piston 5 de façon à définir, de part et d'autre de la première structure de piston 5, des chambres opposées $8_1$, $8_2$ d'une première paire de chambres. De façon similaire, sur la seconde tige 4 et la seconde structure de piston 6 est monté à coulissement étanche un second cylindre 9 définissant intérieurement des chambres opposées $10_1$ et $10_2$ d'une seconde paire de chambres. Les corps des cylindres 7 et 9 sont avantageusement réalisés en fonderie avec des flasques d'extrémité annulaires rapportés.

Dans le mode de réalisation représenté, le second cylindre 9 est formé, sur sa face extérieure supérieure, avec une structure de crémaillère 11 coopérant en engrènement avec un pignon 12 tourillonnant dans le boîtier 1 et relié à un arbre d'entrée 13 du mécanisme lui-même destiné à être relié au volant de direction 14 du véhicule.

Le second cylindre 9 comprend une partie centrale 15 s'étendant dans la direction vers le premier cylindre 7 et formée avec un logement 16 dans lequel est reçue, avec interposition d'un coussinet en matériau élastomère 17, une saillie de connection 18 solidaire du premier cylindre 7, les deux cylindres 7 et 9 étant ainsi reliés centralement l'un à l'autre par un accouplement élastique. La partie centrale 15 du second cylindre 9 comporte des joues latérales 19 s'étendant au voisinage de la paroi de fond 20 du boîtier 1. Sur chaque joue 19 est fixé un élément d'axe 21 s'étendant à guidage et à coulissement au travers d'une ouverture longitudinale 22 du fond 20 du boîtier 1 pour être relié, par une rotule 23, à une biellette 24 d'un mécanisme d'orientation des roues directrices du véhicule, comme on le voit bien sur la Figure 5. Aux éléments d'axes 21 est associée une structure 25 d'obturation de la fente 22 et constituée de deux voiles à ondulations longitudinales reliés centralement de façon libérable par une liaison du type fermeture à glissière dont le curseur est solidarisé aux éléments d'axes 21, comme décrit dans le document EP-A-0 144 259 au nom de la Demanderesse, dont le contenu est supposé intégré ici pour référence.

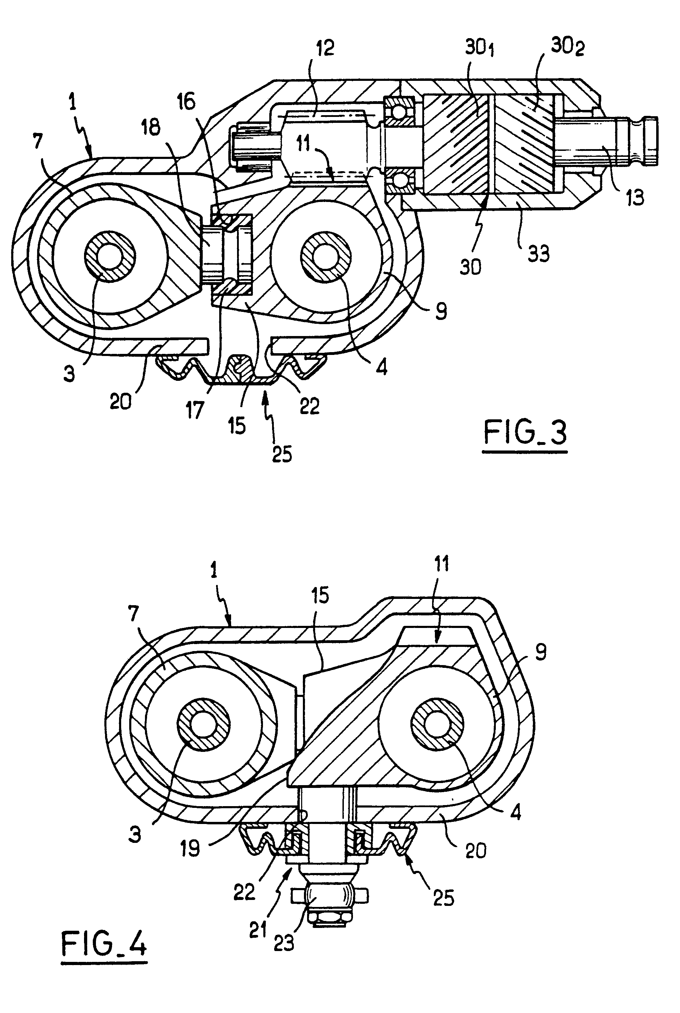

Le mécanisme de direction assistée comprend en outre un moyen de valve de distribution 30 actionnable en même temps que l'arbre d'entrée 13 pour alimenter sélectivement en fluide sous pression d'assistance les chambres $8_1$, $8_2$, respectivement $10_1$, $10_2$ par des canalisations de distribution $B_1$, $B_2$ et $A_1$, $A_2$ respectivement. Le moyen de valve de distribution 30 est avantageusement du type rotatif et peut être interposé en tout point de la transmission entre le volant de direction 14 et le pignon 12. Comme représenté sur la Figure 5, le moyen de valve de distribution 30 peut être aménagé au bas de la colonne de direction et associé à un renvoi d'angle 31, l'arbre de sortie de la valve 30 étant relié à l'arbre d'entrée 13 solidaire du pignon 12 par un arbre intermédiaire 32. En variante, comme représenté sur la Figure 3, le moyen de valve de distribution 30 peut être disposé dans un boîtier 33 rapporté sur le boîtier fixe 1 en étant ainsi interposé directement entre l'arbre d'entrée 13 et le pignon 12. Dans ce cas, pour simplifier la fabrication et faciliter le montage, la crémaillère 11 peut être montée élastiquement sur le second cylindre mobile 9 comme décrit dans le document EP-A-0 144 259 sus-mentionné.

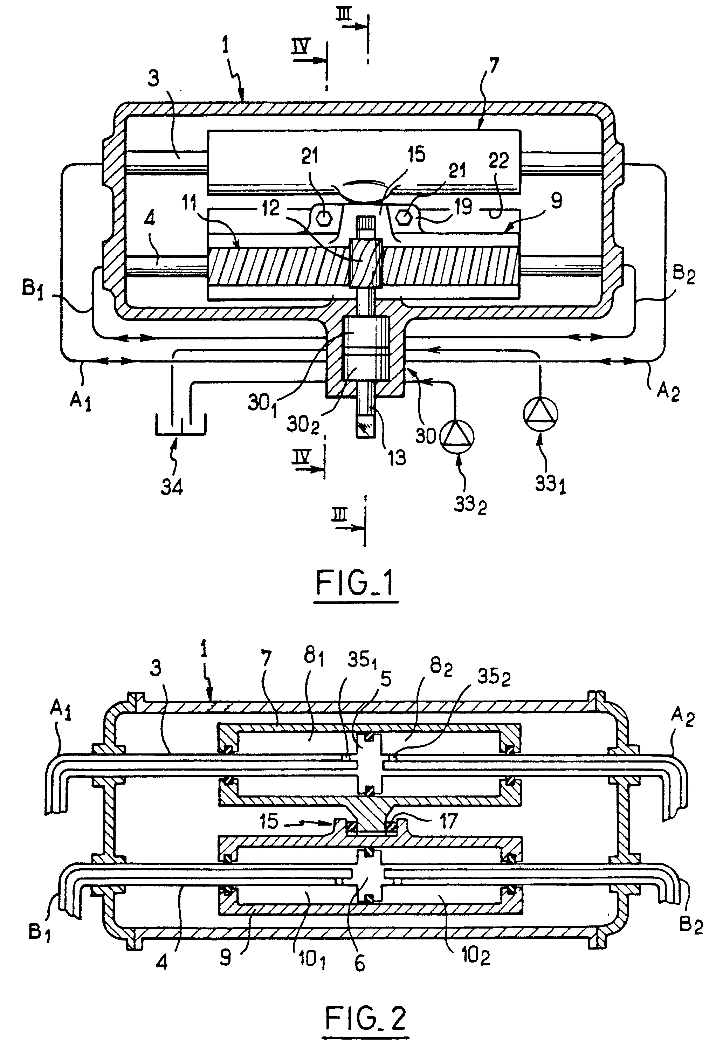

Le mécanisme de direction assistée selon l'invention peut être mis en oeuvre avec un circuit hydraulique unique alimentant en parallèle les cylindres 7 et 9 via la valve de distribution 30. De préférence, toutefois, comme représenté sur la Figure 1, le mécanisme de direction assistée selon la présente invention est réalisé sous la forme d'un mécanisme à double circuit mettant en oeuvre une valve rotative double $30_1$ et $30_2$ actionnable séquentiellement, chaque partie de valve intéressant un cylindre respectif 7, 9 pour alimenter ce dernier en fluide sous pression en provenance d'une source de pression propre $33_1$ et $33_2$ avec retour vers un réservoir double 34. La valve double $30_1$ et $30_2$ est avantageusement du type à double rotor en étoile telle que décrite dans le document EP-A-0 166 657 au nom de la Demanderesse, dont le contenu est supposé intégré ici pour référence. Quoique les liaisons hydrauliques $A_1$, $A_2$ et $B_1$, $B_2$ entre le moyen de valve de distribution 30 et les chambres des cylindres 7 et 9 puissent être réalisées par des tubulures souples, ces conduites sont avantageusement reliées aux extrémités respectives des tiges 3 et 4 constituées sous la forme de tiges creuses, comme on le voit sur la Figure 2, ménageant ainsi, pour chaque cylindre, deux chenesux d'alimentation centraux communiquant avec les chambres $8_1$, $8_2$, respectivement $10_1$, $10_2$, des cylindres de part et d'autre de chaque structure de piston 5, 6, respectivement, par des orifices tels que $35_1$ et $35_2$ ménagés dans les parois du tube creux correspondant 3 et 4. Comme on le voit bien sur les Figures 3 et 4, le boîtier fixe 1 est conformé de façon à enclore complètement les tiges 3, 4 et les cylindres 7 et 9 de sorte que, en particulier avec des tiges creuses 3 et 4 et le moyen de valve 30 aménagé dans le boîtier 33, l'ensemble du mécanisme de direction assistée se présente sous la forme d'une structure unitaire compacte et robuste, aménageable simplement, de diverses façons, sur tout type de chassis de véhicule existant.

## Revendications

1. Mécanisme de direction assistée, comprenant un boîtier fixe (1) dans lequel est agencé un ensemble coopérant à pignon (12) et crémaillère (11), le pignon étant destiné à être relié à un organe (13) de commande d'entrée du mécanisme, un ensemble d'assistance à fluide sous pression comprenant un premier piston fixe (5) solidarisé au boîtier (1) par une première tige (3) et auquel est associé un premier cylindre mobile (7) disposé parallèlement à la crémaillère (11) et couplé à cette dernière, et délimitant une première paire de chambres de pression ($8_1$, $8_2$) de part et d'autre du premier piston (5), un moyen de valve de distribution (30) actionnable par l'organe de commande d'entrée (13) pour alimenter sélectivement en fluide sous pression les chambres de la première paire de chambres, et des moyens de connection (21) reliés à la crémaillère et destinés à être reliés à un mécanisme (24) d'orientation de roue d'un véhicule, caractérisé en ce qu'il comprend un second piston fixe (6) solidarisé au boîtier (1) par une seconde tige (4) parallèle à la première tige (3), auquel est associé un second cylindre mobile (9) supportant la crémaillère (11) et délimitant une seconde paire de chambres ($10_1$, $10_2$) de part et d'autre du second piston (6), et auquel sont reliés les moyens de connection (21), le moyen de valve (30) étant agencé pour alimenter sélectivement les chambres de la seconde paire de chambres ($10_1$, $10_2$).

2. Mécanisme selon la revendication 1, caractérisé en ce que les première (3) et seconde (4) tiges et les premier (7) et second (9) cylindres sont totalement logés dans le boîtier (1).

3. Mécanisme selon la revendication 2, caractérisé en ce que les première (3) et seconde (4) tiges sont creuses et comportent chacune des passages de fluide reliés respectivement aux chambres de la paire de chambres associées ($8_1$, $8_2$ ; $10_1$, $10_2$).

4. Mécanisme selon la revendication 2 ou la revendication 3, caractérisé en ce que les moyens de connection (21) s'étendent à guidage et à coulissement au travers d'une ouverture (22) formée dans une paroi latérale (20) du boîtier (1).

5. Mécanisme selon l'une des revendications précédentes, caractérisé en ce que le second cylindre (9) est relié aux moyens de connection (21) et au premier cylindre (7) par une partie centrale (15, 19) s'étendant vers le premier cylindre (7).

6. Mécanisme selon la revendication 5, caractérisé en ce que le second cylindre (9) est relié au premier cylindre (7) par une liaison élastique (18, 17).

7. Mécanisme selon l'une des revendications précédentes, caractérisé en ce que le moyen de valve (30) comprend des première ($30_2$) êt seconde ($30_1$) parties de valve alimentant respectivement les chambres des première ($8_1$, $8_2$) et seconde ($10_1$, $10_2$) paires de chambres.

8. Mécanisme selon la revendication 7, caractérisé en ce que les première ($30_2$) et seconde ($30_1$) parties de valve sont destinées à être reliées chacune à un circuit d'alimentation de fluide sous pression propre ($33_2$, $A_{1,\,2}$ ; $33_1$, $B_{1,\,2}$).

**Patentansprüche**

1. Kompaktservolenkungsmechanismus mit einem festen Gehäuse (1), in dem eine Einheit aus einem Zahnrad (12) und einer diesem zugeordneten Zahnstange (11) angeordnet ist, wobei das Zahnrad mit einem in das Gehäuse hineinführenden Steuerorgan (13) verbindbar ist, einer mit einem Fluid unter Druck arbeitenden Servovorrichtung, die einen ersten festen Kolben (5), der mit dem Gehäuse (1) über eine erste Kolbenstange (3) verbunden ist und einen ersten beweglichen Zylinder (7) aufweist, der parallel zur Zahnstange (11) angeordnet und mit dieser verbunden ist und der ein erstes Paar von auf beiden Seiten des Kolbens (5) befindlichen Druckkammern ($8_1$, $8_2$) begrenzt, einem vom Steuerorgan (13) betätigten Verteilerventil (30) für die selektive Zufuhr von unter Druck stehendem Fluid zu den Kammern des ersten Kammerpaares und eine Verbindungsvorrichtung (21) an der Zahnstange, die mit einer Vorrichtung zum Lenken mindestens eines Fahrzeugrades verbindbar ist, dadurch gekennzeichnet, daß ein zweiter fester Kolben (6) vorgesehen ist, der über eine zweite, der ersten Kolbenstange (3) parallele Kolbenstange (4) mit dem Gehäuse (1) verbunden ist und daß diesem zweiten Kolben (6) ein zweiter beweglicher, die Zahnstange (11) tragender Zylinder (9) zugeordnet ist, der ein zweites Paar von Druckkammern ($10_1$ $10_2$) zu beiden Seiten des zweiten Kolbens (6) begrenzt, und an dem die Verbindungsvorrichtung (21) angebracht ist und daß die Ventilvorrichtung (30) selektiv die Kammern des zweiten Kammerpaares ($10_1$ $10_2$) versorgt.

2. Mechanismus nach Anspruch 1, dadurch gekennzeichnet, daß die erste (3) und die zweite (4) Kolbenstange und der erste (7) und der zweite (9) Zylinder sich vollständig in dem Gehäuse (1) befinden.

3. Mechanismus nach Anspruch 2, dadurch gekennzeichnet, daß die erste (3) und die zweite (4) Kolbenstange hohl sind und jede Durchflußöffnungen für ein Fluid enthält, die in Verbindung mit den Kammern des jeweiligen zusammengehörigen Kammerpaares ($8_1$, $8_2$; $10_1$ $10_2$) stehen.

4. Mechanismus nach Anspruch 2 oder 3, dadurch gekennzeichnet, daß die Verbindungsvorrichtung (21) geführt und gleitend sich durch eine Öffnung (22) in einer Seitenwand (20) des Gehäuses (1) erstreckt.

5. Mechanismus nach einem der vorhergehenden Ansprüche, dadurch gekennzeichnet, daß der zweite Zylinder (9) mit der Verbindungsvorrichtung (21) und dem ersten Zylinder (7) über einen mittleren Abschnitt (15, 19) verbunden ist, der sich bis zum ersten Zylinder (7) erstreckt.

6. Mechanismus nach Anspruch 5, dadurch gekennzeichnet, daß der zweite Zylinder (9) mit dem ersten Zylinder (7) über eine elastische Verbindung (18, 17) verbunden ist.

7. Mechanismus nach einem der vorhergehenden Ansprüche, dadurch gekennzeichnet, daß die Ventilvorrichtung (30) ein erstes ($30_2$) und ein zweites ($30_1$) Ventilteil enthält, die die jeweiligen Kammern des ersten ($8_1$, $8_2$) bzw. des zweiten ($10_1$, $10_2$) Kammerpaares versorgen.

8. Mechanismus nach Anspruch 7, dadurch gekennzeichnet, daß das erste ($30_2$) und das zweite ($30_1$) Teil des Ventiles jeweils mit einem unter Eigendruck stehenden Versorgungskreislauf ($33_2$, $A_{1,\,2}$; $33_1$, $B_{1,\,2}$) für das Fluid verbindbar sind.

**0 188 158**

## Claims

1. Assisted steering mechanism, comprising a stationary casing (1) in which a cooperating pinion (12) and rack (11) assembly is arranged, the pinion being intended to be connected to an input control member (13) of the mechanism, a fluid under pressure assistance assembly comprising a first stationary piston (5) which is firmly fixed to said casing (1) by a first rod (3) and with which is associated a first movable cylinder (7) which is arranged parallel and coupled to the rack (11), and which defines a first pair of pressure chambers $(8_1, 8_2)$ on each side of the first piston (5), a distribution valve means (30) actuatable by the input control member (13) so as to selectively supply the chambers of the first pair of chambers with fluid under pressure, and connecting means (21) connected to the rack and intended to be connected to a mechanism (24) for steering the wheels of a vehicle, characterized in that the mechanism comprises a second stationary piston (6) which is firmly fixed to the casing (1) by a second rod (4) parallel to the first rod (3), with which is associated a second movable cylinder (9) which supports the rack (11) and defines a second pair of chambers $(10_1, 10_2)$ on each side of the second piston (6), and to which the connecting means (21) are connected, the valve means (30) being arranged so as to selectively supply the chambers of the second pair of chambers $(10_1, 10_2)$.

2. Mechanism according to Claim 1, characterized in that the first rod (3) and the second rod (4), and the first cylinder (7) and the second cylinder (9) are completely housed within the casing (1).

3. Mechanism according to Claim 2, characterized in that the first rod (3) and the second rod (4) are hollow and each incorporate fluid passages which are connected respectively to the chambers of the associated pair of chambers $(8_1, 8_2; 10_1, 10_2)$.

4. Mechanism according to Claim 2 or Claim 3, characterized in that the connecting means (21) guidingly and slidingly extend through an opening (22) formed in a lateral wall (20) of said casing (1).

5. Mechanism according to one of the preceding claims, characterized in that the second cylinder (9) is connected to the connecting means (21) and to the first cylinder (7) by a central portion (15, 19) extending towards the first cylinder (7).

6. Mechanism according to Claim 5, characterized in that the second cylinder (9) is connected to the first cylinder (7) by an elastic connection (18, 17).

7. Mechanism according to any of the preceding claims, characterized in that the valve means (30) comprise a first valve part $(30_2)$ and a second valve part $(30_1)$ feeding the chambers of the first pair of chambers $(8_1, 8_2)$ and of the second pair of chambers $(10_1, 10_2)$, respectively.

8. Mechanism according to Claim 7, characterized in that the first valve part $(30_2)$ and the second valve part $(30_1)$ are each intended to be connected to a respective circuit supplying fluid under pressure $(33_2, A_{1, 2}; 33_1, B_{1, 2})$.

$\underline{FIG\_1}$

$\underline{FIG\_2}$

0 188 158

FIG. 3

FIG. 4

FIG.5

0 188 158